(19) Europäisches Patentamt
European Patent Office
Office européen des brevets

(11) **EP 2 182 408 A1**

(12) **EUROPEAN PATENT APPLICATION**
published in accordance with Art. 153(4) EPC

(43) Date of publication:
**05.05.2010 Bulletin 2010/18**

(51) Int Cl.:
***G02F 1/167*** (2006.01)   ***G02F 1/17*** (2006.01)

(21) Application number: **08827102.8**

(22) Date of filing: **06.08.2008**

(86) International application number:
**PCT/JP2008/064131**

(87) International publication number:
**WO 2009/020154 (12.02.2009 Gazette 2009/07)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **06.08.2007   JP 2007204543**

(71) Applicant: **Bridgestone Corporation
Tokyo 104-8340 (JP)**

(72) Inventors:
• **KAGA, Norihiko
Kodaira-shi
Tokyo 187-8531 (JP)**
• **SHIZUKU, Takahisa
Kodaira-shi
Tokyo 187-8531 (JP)**

(74) Representative: **Whalley, Kevin
Marks & Clerk LLP
90 Long Acre
London WC2E 9RA (GB)**

(54) **DISPLAY MEDIUM PARTICLES AND INFORMATION DISPLAY PANEL USING THE DISPLAY MEDIUM PARTICLES**

(57)   The present invention provides an information display panel capable of maintaining an excellent image property even after repeated rewrite, and particles for display media used therefor. The information display panel, in which at least one kind of display media including a charged particle for display media are sealed in a space between substrates at least one of which is transparent, for displaying an image by application of electrostatic force to the display media by means of an electronic field forming means, uses the particle for display media comprised of a mother particle, child particles and fine particles. The child particles, having a molecular structure of three-dimensional crosslinked structure and a particle diameter smaller than that of the mother particle which has no molecular structure of three-dimensional crosslinked structure, are embedded in a surface of the mother particle. It thereby hardens the surface of the mother particle. Then, the fine particles having the particle diameter smaller than that of the child particles are attached to the mother particle having the child particles embedded therein, it is thus possible to prevent the fine particles from being buried in the mother particles.

*FIG. 6*

EP 2 182 408 A1

**Description**

TECHNICAL FIELD

The present invention relates to complex particles in which child particles are embedded in mother particles and information display panels using the complex particles.

RELATED ART

As an information display device substitutable for a liquid crystal display (LCD), there are known information display devices adopting a method driving charged particles in a liquid (an electrophoretic method) or a method driving the charged particles in a gas (an electronic liquid powder method).

As the information display panel used for the information display apparatus of a charged particles driving method, the-re is known an information display panel, in which at least two kinds of display media composed of at least one kind of particles and having optical reflectance and charging property are sealed in a space between two opposing substrates, at least one of which is transparent, for displaying information such as an image by moving the display media by application of an electric field to the display media (for example, a brochure of WO2003/050606).

SUMMARY OF INVENTION

TECHNICAL PROBLEM

The above information display panel has disadvantages that, when particles obtained from kneading, crushing and classifying by use of conventional compositions and materials are used as particles for display media composing the display media, the particles for display media are pressed against the substrate and deformed because of an image force of electrification charge of the particles for display media and an area of the particles for display media to be attached to the substrate is increased, which enlarges adherence of the particles for display media to the substrate, it therefore unable to achieve a high contrast display and reduce a driving electric field.

Although conventional particles for display media have a composition in which fine particles are attached to a surface of the particle, the fine particles attaching to the surface of the particle are buried in the particle because of dynamic application caused by crush of particles themselves and crush of particles and an electrode plate by repeated movement of the particles. As a result, it causes problems such as increase in adherence between the particles and the substrate, deterioration of flow property of the particles and change of charging property of the particles, which prevents from maintaining an initial performance.

An object of the present invention is to provide the information display panel capable of solving the above problems by maintaining an excellent image property even after repeated rewrite and the particles for display media used for the information display panel.

SOLUTION TO PROBLEM

A particle for display media according to the present invention comprising a mother particle, child particles and fine particles is **characterized in that** the child particles, having a molecular structure of three-dimensional crosslinked structure and a particle diameter smaller than that of the mother particle which is free of a three-dimensional crosslinked structure, are embedded in a surface of the mother particle, and the fine particles, having a particle diameter smaller than that of the child particles, are attached to the mother particle having the child particles embedded therein.

In the particle for display media according to the present invention, it is preferred that the particle diameter of the child particles is smaller than 1/8 of the particle diameter of the mother particle.

In the particle for display media according to the present invention, it is preferred that a fraction of surface coverage of the mother particle by the child particles is equal to or more than 50%.

In the particle for display media according to the present invention, it is preferred that the child particles have an aspect ratio of equal to or more than 0.8.

Moreover, an information display panel according to the present invention, in which at least one kind of display media including at least one kind of charged particles for display media are sealed in a space between two substrates at least one of which is transparent, for displaying an image by moving the display media by application of electrostatic force thereto by means of an electronic field forming means, characterized in using at least one kind of the particle for display media according to the present invention.

ADVANTAGEOUS EFFECTS ON INVENTION

According to the present invention, in the information display panel, having two substrates at least one of which is transparent and at least one kind of display media including at least one kind of charged particles for display media sealed in the space between the substrates, and being capable of displaying the image by moving the display media by application of electrostatic force to the display media by means of the electric field forming means, the display media particle is composed of the mother particle, the child particle and the fine particle, and the child particles, having the three-dimensional crosslinked structure and the particle diameter smaller than that of the mother particle which is free of a three-dimensional crosslinked structure, are embedded on the surface of the mother particle, thereby the surface of the mother particle is hardened. Then, the fine particles having the particle diameter smaller than that of the child particles are attached to the mother particle having the child particles embedded therein, it thus prevents burial of the fine particles under the surface of the mother particle. As a result, it enables to provide the information display panel capable of maintaining an excellent image property even after repeated rewrite.

BRIEF DESCIPTION OF DRAWINGS

[Fig. 1] Figs. 1a and 1b are diagrams respectively illustrating an example of an information display panel according to the present invention;
[Fig. 2] Figs. 2a and 2b are diagrams respectively illustrating another example of the information display panel according to the present invention;
[Fig. 3] Figs. 3a and 3b are diagrams respectively illustrating yet another example of the information display panel according to the present invention;
[Fig. 4] Figs. 4a - 4d are diagrams respectively illustrating yet another example of the information display panel according to the present invention;
[Fig. 5] Fig. 5 is a diagram illustrating yet another example of the information display panel according to the present invention;
[Fig. 6] Fig. 6 is a diagram illustrating a basic structure of a display media particle according to the present invention; and
[Fig. 7] Fig. 7 is a diagram showing examples of forms of partition walls of the information display panel according to the present invention.

BEST MODE FOR CARRYING OUT THE INVENTION

First, it is explained about a basic structure of an information display panel according to the present invention. In the information display panel according to the present invention, an electric field is applied to a display medium having an optical reflectivity and an electrostatic property and composed of at least one kind of particles sealed in a space between opposed two substrates. The charged display media are attracted along a direction of the electric field applied, by a force of the electrostatic field, Coulomb force, an electrostatic force and the likes, and information display such as an image is performed by movements of the display media caused by change of the electric field. Therefore, it is necessary to design the information display panel such that the display media can move uniformly as well as maintaining stability during repetitive rewrite of display or continuous display. Here, forces applied to the particles constituting the display media may be an attraction force between the particles due to Coulomb force, an imaging force with respect to the electrodes or substrates, an intermolecular force, a liquid bonding force, gravity and the likes.

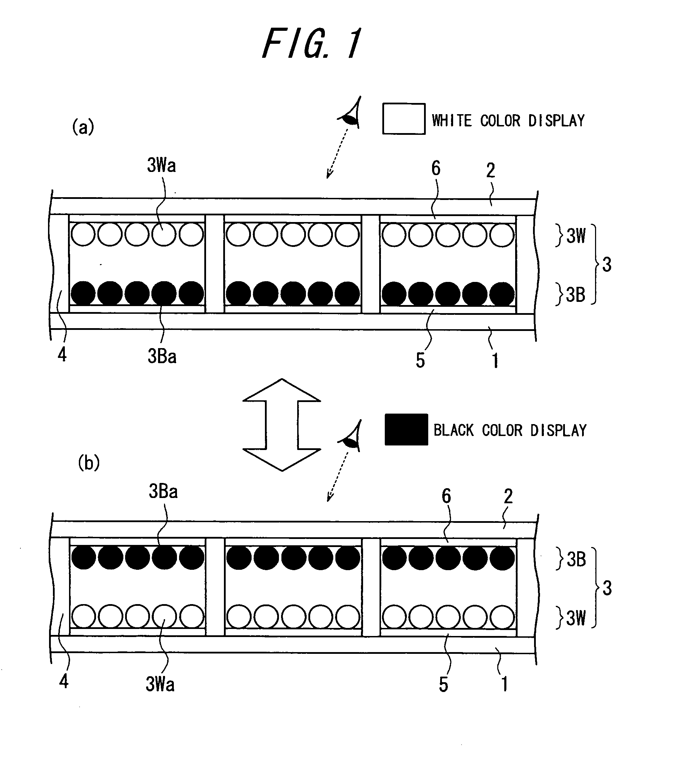

An example of the information display panel according to the present invention is described based on Figs. 1a, 1b. In the example shown in Figs. 1a and 1b, at least two kinds of display media 3 consisting of at least one kind of particles and having different optical reflectance and charge characteristic (here, white color display media 3W comprised of a particle group of white color particles 3Wa for white color display media and black color display media 3B comprised of a particle group of black color particles 3Ba for black color display media) are moved in each cell formed by partition walls 4 in a perpendicular direction with respect to substrates 1, 2, in accordance with an electric field generated by application of a voltage between an electrode 5 (individual electrode) provided to the substrate 1 and an electrode 6 (individual electrode) provided to the substrate 2. Then, a black color display is performed by having an observer view the black color display media 3B as shown in Fig. 1a, or a white color display is performed by having the observer view the white color display media 3 W as shown in Fig. 1b. It is to be noted the partition walls at a front side are omitted in Figs. 1a, 1b. The electrodes can be either provided outside the substrates or embedded inside the substrates. It is also possible to perform display in a similar manner by use of an electric field forming means from outside of the substrates without providing the electrodes.

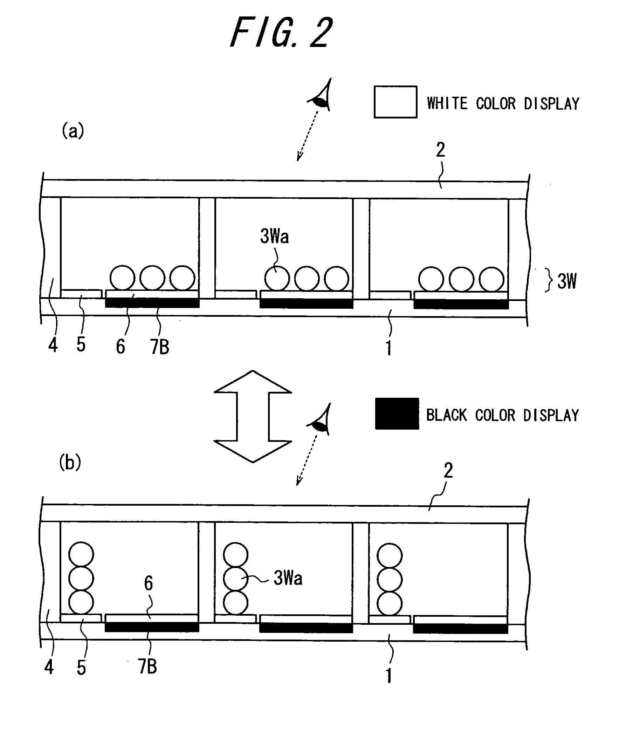

In the example shown in Figs. 2b, 2a, display media 3 (here, it indicates the white color display media 3W comprised of the particle group of the white color particle 3Wa for the white color display media), composed of at least one kind of particles and having at least optical reflectance and charge characteristic are moved in each cell formed by the partition walls 4 in the direction parallel to the substrates 1, 2, in accordance with the electric field generated by application of voltage between the electrodes 5, 6 provided to the substrate 1. Then, white color display is performed by having the observer view the white color display media 3W as shown in Fig. 2a, or black color display is performed by having the observer view the color of a black board 7B as shown in Fig. 2b. It is to be noted that the partition walls at the front side are omitted in the example in Figs. 2a, 2b. Here, the same display can be performed by having the black color display media instead of the white color display media 3W and a white color board instead of a black color board 7B. The electrodes can be either provided outside the substrate or embedded inside the substrate.

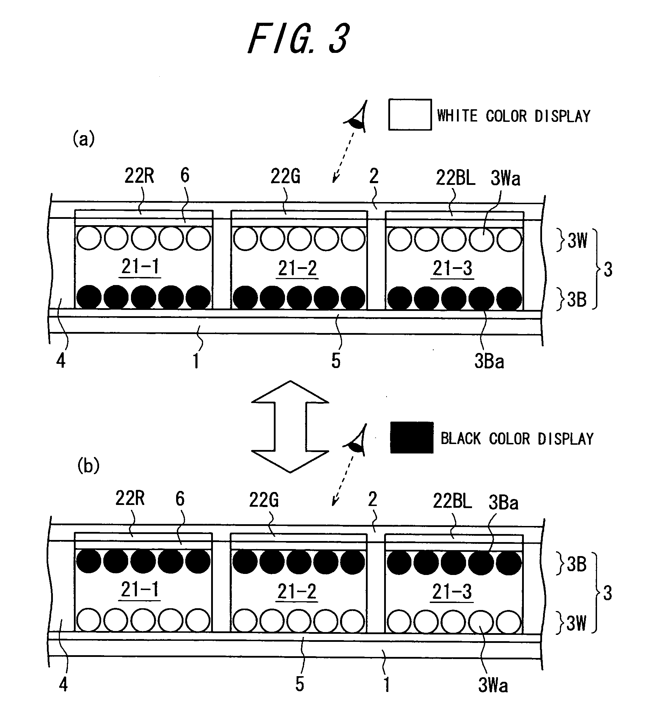

Figs. 3a, 3b show an example of a color dot display having basically the same constitution as the example shown in Fig. 1 and three cells which altogether constitute a unit for display (each cell is a single unit pixel and, in this case, a unit for display is constituted of three-color unit pixel). In the example shown in Figs. 3a and 3b, the white color display media 3W and the black color display media 3B as the display media are filled in all cells 21-1 to 21-3, and a red color filter 22R, a green color filter 22G and a blue color filter 22BL are provided to the first cell 21-1, the second sell 21-2, and the third cell 21-3, respectively, at the observer's side of the cells, so as to constitute a unit pixel by the first cell 21-1, the second cell 21-2 and the third cell 21-3. In this example, the white color display is performed for the observer by moving the white color display media 3W in all of the first cell 21-1 to the third cell 21-3 in one unit to the observer's side as shown in Fig. 3a, whereas the black color display is performed for the observer by moving the black color display media 3B in all of the first cell 21-1 to the third cell 21-3 in one unit to the observer's side as shown in Fig. 3b. A multi-color display can be performed depending on an arrangement of the display media in each of the cells. It is to be noted that the partition walls arranged at the front side are omitted in Figs. 3a, 3b.

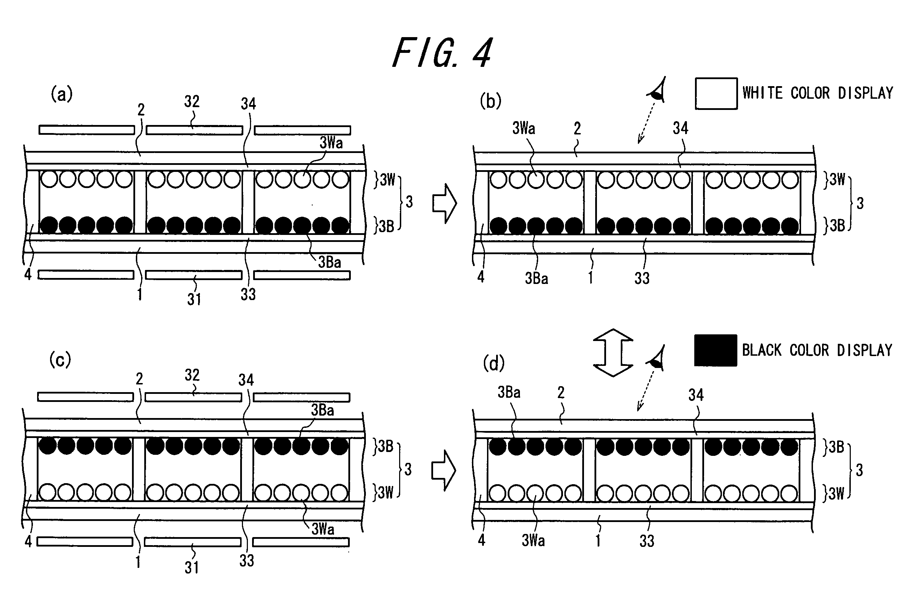

In an example shown in Figs. 4a - 4d, first as shown in Figs. 4a, 4c, at least two kinds of display media 3 constituted of at least one kind of particles having different optical reflectance and charge characteristic (here, it indicates the white color display media 3W comprised of the particle group of the white color particle 3 Wa for the white color display media and the black color display media 3B comprised of the particle group of the black color particle 3Ba for the black color display media) are moved each cell formed by partition walls 4 in a perpendicular direction with respect to the substrates 1 and 2, in accordance with the electric field generated by application of a voltage between an external electric field forming means 31 provided outside the substrate 1 and an external electric field forming means 32 provided outside the substrate 2. Then, the white color display is performed by having the observer view the white color display media 3W as shown in Fig. 4b or the black color display is performed by having the observer view the black color display media 3B as shown in Fig. 4d. It is to be noted the partition walls at the front side are omitted in Figs. 4a - 4d. In addition, a conductive member 33 and a conductive member 34 are provided inside the substrate 1 and inside the substrate 2, respectively, although these conductive members are not essential.

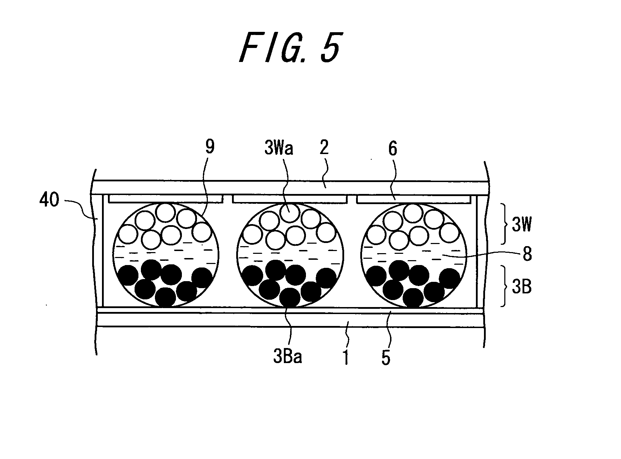

In an example shown in Fig. 5 uses a microcapsule 9, filled with the white color particle 3Wa for the white color display media and the black color particles 3Ba for the black color display media together with an insulating liquid 8, in place of the cell formed by the partition walls 4 filled with the white color display media 3W and the black color display media 3B shown in Figs. 1a, 1b. A substrate distance securing member 40 is provided so as to secure a distance between the substrates 1, 2 which are opposed.

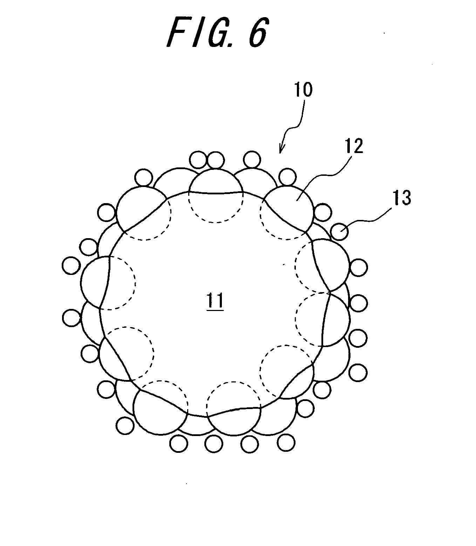

Next, it is described about a basic constitution of the particles for display media according to the present invention shown in Fig. 6.
A display media particle 10 is constituted of a mother particle 11, child particles 12 and fine particles 13. The child particles 12 are embedded in a surface of the mother particle 11, and the fine particles 13 are attached to a periphery of the child particles 12. Since the child particles 12 having higher hardness than that of the mother particle 11 are embedded in the surface thereof, it can harden the surface of the mother particle 11, preventing the fine particles 13 from getting buried in the surface of the mother particle 11. A particle diameter of the mother particle, the particle diameter of the child particles and the particle diameter of the fine particles become smaller in the stated order. It is to be noticed that the child particles embedded in the surface of the mother particle at the front side are omitted in Fig. 6.

Although a part of the display media which comes into contact with the substrates is deformed (flexural deformation) because of an image force of electrification charge of the display media, the flexural deformation of the display media particle 10 is only small, as the child particles 12 have high hardness. Furthermore, since the mother particle 11 is surrounded by the child particles 12, the display media particle 10 has only a small area to come into contact with the substrate. Therefore, adherence of the display media particle 10 to the substrate is small, it is thus possible to efficiently drive the display media particle 10 with application of less electric field intensity and to provide a display of high contrast and low driving voltage. Three-dimensionally crosslinked silica particles and the like may be used as the child particles 12.

Even the particles for display media hit one another or hit an electrode plate after repeated reverse display, the fine particles attached to the mother particle and the child particles are not buried in the particles, or buried in a slower manner than conventional particles, as the mother particle is surrounded by the child particles having high hardness. Hence, it is possible to provide the information display panel capable of maintaining an initial performance, namely, a good durability, without causing increase in adherence of the particles for display media and the substrate, deterioration of flow characteristic of the particles for display media, or change in charging characteristics of the particles for display media even after repeated reverse display.

In addition, it is considered that gradual release of the fine particles, initially attached between the child particles, in accordance with ongoing duration contributes to an improvement in duration. That is, since the fine particles attached and accumulated in a space between adjacent child particles at an initial duration do not directly hit the substrate or other mother particles, the fine particles are not damaged/buried by reverse driving of the mother particles but can maintain sufficient performance and quantity. As reverse display is repeated, the fine particles are released to the surface by oscillation caused by reverse display driving and decrease adherence of the mother particle to the substrate, which leads to a high durability performance as a result.

Even when only one of the at least two kinds of the display media for the information display panel contains the particles for display media according to the present invention and the other display media contains conventionally constituted particles (for example, particles obtained by a kneading and crushing method or a polymerization method), it is possible to obtain the above effect to some degrees. When both of the two kinds of the display media contain the particles for display media according to the present invention, the above effect is well exerted.

It is preferred that the particle diameter of the child particle 12 is smaller than 1/8 of the particle diameter of the mother particle 11. When the particle diameter of the child particle 12 is greater than or equal to that, it is not possible to perform attaching and combining process of the child particles to the surface of the mother particle evenly.

It is preferred that the fraction of surface coverage of the mother particle 11 by the child particles 12 is equal to or more than 50%. When it is less than 50%, the mother particle has a large exposed area on the surface thereof, which increases adherence when coming into contact with the substrate.

Moreover, the fine particles are buried in the area.

The fraction of surface coverage of the mother particle by the child particles is approximated by a plane closest packing coverage by true sphere of monodispersity of the particle diameter, that is, the fraction of surface coverage C[%] of the mother particle by the child particle is shown by the following formula 1, provided that D is an average particle diameter of the mother particle, $\Phi$ is a compounding amount of the mother particle (volume fraction), d is an average particle diameter of the child particle, and $\phi$ is a compounding amount of the child particle (volume fraction).

[Formula 1]

$$C[\%] = \frac{2\pi d\Phi}{\sqrt{3}D\phi} \times 100$$

It is preferred that the child particle 12 has the aspect ratio of 0.8 or over.

When the child particle 12 has the aspect ratio of less than 0.8, it is not possible to perform the attaching and combining process of the child particles evenly to the surface of the mother particle.

A definition and a measuring method of the aspect ratio (sphericity) of the child particle are as follows.

An aspect ratio As analyzed by an image taken by a scanning electron microscope (S2700, manufactured by Hitachi, Ltd.) is defined as an index of sphericity. When a short shaft diameter is Dsa and a long shaft diameter is Dsb, the aspect ratio As=Dsa/Dsb. As is measured for 100 particles and an average thereof is adopted. The child particles of the particles for display media according to the present invention is in a spherical shape, and a general additive for them is AS<0.8.

The following is an explanation of each member constituting the information display panel according to the present invention.

As for the substrates, at least one of the substrates (display side substrate) is a transparent substrate such that a color of the display media can be observed from outside of the information display panel, and preferably made of a material having a high transmission factor of visible light and an excellent heat resistance. A rear side substrate may be either transparent or opaque. The substrate is, for example, a plastic-based substrate made from polyethylene terephthalate (PET), polyethylene naphthalate (PEN), polyether sulfone (PES), polyethylene (PE), polycarbonate (PC), polyimide (PE) or acryl, or a glass-based substrate. A thickness of the substrate is preferably 2 to 5000 $\mu$m, more preferably 5 to 2000 $\mu$m. It becomes difficult for the substrate to maintain strength and distance uniformity between the substrates when it is too thin, while the substrate is inexpedient to be used for a slim information display panel when it is thicker than 5000 $\mu$m.

As materials for the electrode and the conductive member provided to the information display panel, it is suitably selected from, for example, metals such as aluminum, silver, nickel, copper, gold and the likes, conductive metal oxides such as indium tin oxide (ITO), zinc-toped indium tin oxide (IZO), Al-doped zinc oxide (AZO), indium oxide, conductive tin oxide, antimony tin oxide (ATO), conductive zinc oxide and the likes, or conductive polymers such as polyaniline, polypyrrole, polythiophene and the likes. As a method to form the electrode and the conductive member, it adopts a method to form a thin film from the above materials by a sputtering method, a vacuum vapor deposition method, CVD (chemical vapor deposition) method, a coating method and the likes, or a method to laminate a metallic foil (for example, the rolled copper foil), a method to mix conductive agents with solvents or synthetic resin binder and spray the mixture thereof. Although the electrode and the conductive member to be provided to the substrate 2 at the display side, which is disposed at the viewer's side and needs to be transparent, are required to be transparent as well, the electrode and the conductive member provided to the substrate 1 at the rear side are not required to be transparent. In both cases, the above materials which are conductive and have a pattern formation capability can be suitably used. Additionally, thicknesses of the electrode and the conductive member may be suitable as long as maintaining electro-conductivity and uninterrupted transparency, which is preferably between 0.01 to 10 $\mu$m, more preferably 0.05 to 5 $\mu$m. Although the material and the thickness of the electrode and the conductive member provided to the substrate 1 at the rear side are the same as those provided to the substrate at the display side, it is not required to be transparent. It is to be noted that an external voltage input in this case may be either a direct current or overlapped alternate currents.

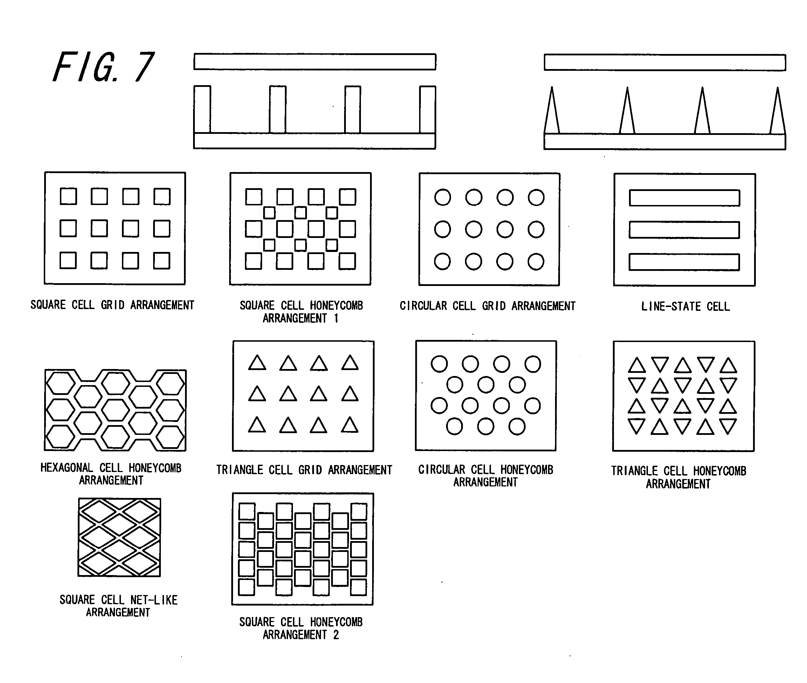

A height and a width of the partition walls for forming a cell in a space between the substrates of the information display panel are optimally determined in accordance with a kind of the display media for displaying and not uniformly limited. However, the width of the partition walls is adjusted to be 2 - 100 $\mu$m and preferably 3 - 50 $\mu$m, and the height of the partition walls is adjusted to 10 - 500 $\mu$m and preferably 10 - 200 $\mu$m. Although a shape of the cell of the information display panel obtained by overlapping the substrate at the display side and the substrate at the rear side is exemplified by polygonal such as square, triangle, line-state, circle, hexagonal and so on viewed from a plane surface of the substrate as shown in Fig. 7, it may also be a circle, oval, racetrack geometry, or a combination of different shapes. Among the above, preferred shapes are the polygonal with rounded corners (especially square with rounded corners), circle, oval, racetrack geometry, as they facilitates movements of the display media. An arrangement of the cells is exemplified by a grid pattern, a honeycomb patter and a net-like pattern, for example. A variety of patterns are used in accordance with the shape of the cells. Among the above, it is preferred to arrange the cell in the shape of square with rounded corners in the grid pattern, and to minimize a part of a cross-sectional part of the partition walls observable from the display side (dimension of a frame of the cell formed of the width of the partition wall) for improvement of sharpness of the display. Here, a method of forming the partition wall is exemplified by a die transfer method, a screen-printing method, a sandblast method, a photolithography method or an additive method. Each of the methods may be preferably used, although the photolithography method using a resist film and the die transfer method are used more preferably.

Next, it will be explained about the particles for display media (hereinafter, also referred to as particles) according to the present invention. The particles for display media themselves or the particles for display media combined with other particles are used as the display media.

In the particle, a resin as a main component may contain charge control agents, coloring agent, inorganic additives and so on as conventionally performed, if necessary. The followings are examples of resin, charge control agent, coloring agent and other additives.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds of organic or inorganic pigments or dye as will be described below are employable.

Examples of black pigments include carbon black, copper oxide, manganese dioxide, aniline black, and activate carbon.

Examples of blue pigments include C.I. pigment blue 15:3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, tartrazinelake, and C.I. pigment yellow 12.

Examples of green pigments include chrome green, chromium oxide, pigment green B, C.I. pigment green 7,Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.

Examples of purple pigments include manganese purple, first violet B, and methyl violet lake.

Examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Pressian blue, Armenian blue, cobalt blue, cobalt green, cobalt violet, ion oxide, carbon black, manganese ferrite black, cobalt ferrite black, copper powder, aluminum powder.

These coloring agents and inorganic additives may be used alone or in combination of two or more kinds thereof. Particularly, carbon black is preferable as the black coloring agent, and titanium oxide is preferable as the white coloring agent.

The particles for display media having a desired color can be produced by mixing the coloring agents mentioned above.

Moreover, it is preferred that the particles for display media of the present invention are evenly shaped having the average particle diameter d(0.5) in a range of 1 - 20 $\mu$m. The image clearness is deteriorated if the average particle diameter d(0.5) is greater than this range , whereas an agglutination force between the particles becomes so large that it interferes with movements of the display media if the average particle diameter is smaller than this range.

Moreover, as to a particle diameter distribution of each particle of the particles for display media according to the present invention, Span of the particle diameter distribution defined by the following formula is less than 5, preferably less than 3.

$$\mathrm{Span} = (d(0.9) - d(0.1))/d(0.5)$$

(here, d(0.5) means a value of the particle diameter expressed by $\mu$m wherein an amount of the particles having the particle diameter larger than or smaller than this value is 50%, d(0.1) means a value of the particle diameter expressed by $\mu$m wherein an amount of the particles having the particle diameter smaller than this value is 10%, and d(0.9) means a value of the particle diameter expressed by $\mu$m wherein an amount of the particles having the particle diameter smaller than this value is 90%).

When the Span is set to under 5, the particle diameter becomes even, which enables even movements of the particles.

Furthermore, as to a correlation between each display media particle, it is important that a ratio of d(0.5) of the particle having a smallest diameter with respect to d(0.5) of the particle having a largest diameter is set to 50 or less, preferably 10 or less. The particles having different charge characteristics move reversely even if the particle diameter distribution Span is made smaller. Therefore, this is a preferred range where each particle has approximately the same size and can easily move in opposite directions.

It is to be noted that, the particle diameter distribution and the particle diameter of the display media particle can be measured by means of a laser diffraction / scattering method. When a laser light is emitted at the particles to be measured, a light intensity distribution pattern due to a diffraction / scattering light occurs spatially. Since this light intensity distribution pattern corresponds to the particle diameter, it is possible to measure the particle diameter and the particle diameter distribution.

The particle diameter and the particle diameter distribution according to the present invention are obtained by a volume standard distribution. In particular, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

Although a charged level of the particles for display media obviously depends on a measuring condition, it was found that the charge level of the particles for display media of the information display panel mostly depends on a primary charged level, charge decay accompanying contact with the partition walls and substrates and an elapsed time, and that especially a saturation value of a charging action of the particles for display media is a control element.

As a result of an earnest investigation by inventors of the present invention, it was found that it is possible to evaluate an adequate range of charging property of the particles for display media by a charging level measurement of the particles for display media by use of the same carrier particles in a blow-off method.

Furthermore, in a case of using a dry-type information display panel, driving the display media in the gap filled with a gas, as the information display panel, it is important to control the gas in the space surrounding the display media, as it contributes to an improvement of display stability. In particular, it is important to control a relative humidity of the gas in the gap to 60% RH or less at 25°C, preferably 50% RH or less.

The above gap is the gas surrounding the display media, which is a part between the substrates 1 and 2 opposed to one another except for the electrodes 5, 6 (in a case where the electrodes are provided inside of the substrates), an occupied section by the display media 3, an occupied section by the partition walls 4 and a seal section of the information display panel in Fig. 1a.

A kind of the gas in the gap is not limited as long as its humidity is within the above range, although preferably used are dry air, dry nitrogen gas, dry argon gas, dry helium gas, dry carbon dioxide gas, dry methane gas and the likes. It is necessary for the gas to be sealed in the information display panel so as to be able to maintain its humidity. For example, it is essential to fill the particles composing the display media and to assemble the information display panel in an atmosphere with a predetermined humidity and, moreover, to apply a seal agent and a sealing method for preventing a humidity invasion from outside of the device.

Although the space between the substrates of the information display panel according to the present invention is not strictly limited as long as it enables the display media to move and it can maintain contrast, it is normally adjusted to 10 - 500 $\mu$m , preferably 10 - 200 $\mu$m.

A volume-occupancy of the display media in the gas in the gap between the substrates opposed one another is preferably 5 - 7 %, more preferably 5 - 60 %. It interferes with movement of the display media when the volume-occupancy is over 70%, while the contrast becomes unclear when the volume-occupancy is less than 5%.

## EMBODIMENTS

The particles for display media according to the present invention are prepared, and initial display test and rewrite endurance display tests are conducted for the information display panel using the particles for display media prepared thereby.

First, it is described how to prepare the particles for display media according to the present invention.

### (1) Mother particle

Polymethyl methacrylate (ACRYPET VH5: Mitsubishi Rayon Co., Ltd.) of 100 pts.wt as a positively-charged mother particle and carbon black (Special Black 4: Evonik Deggusa Japan Co., Ltd.) of 5pts.wt as a black-color colorant are melt and kneaded by a biaxial kneading machine, crushed to fine pieces by a Jet mill (Labo-Jet mill IDS-LJ: product of Nippon Pneumatic Mfg. Co., Ltd.), classified by a classifying machine (MDS-2: product of Nippon Pneumatic Mfg. Co., Ltd.), and then melt and spheroidized by a melting-and-spheroidizing machine (MR-10: product of Nippon Pneumatic Mfg. Co., Ltd.), thereby a positively charged mother particle X with the particle diameter within a range of 0.5 - 50 $\mu$m and an average particle diameter R0= 8.0 $\mu$m are obtained.

Polybutylene terephthalate (Trecon (R) 5201X10: Toray Industries, Inc.) of 100 pts.wt as a negatively charged mother particle and titanium dioxide (Tipaque CR50: Ishihara Sangyo Kaisya, Ltd.) of 100 pts.wt as a white-color colorant are melt and kneaded by the biaxial kneading machine, crushed to fine pieces by the Jet mill (Labo-Jet mill IDS-LJ: product of Nippon Pneumatic Mfg. Co., Ltd.), classified by the classifying machine (MDS-2: product of Nippon Pneumatic Mfg. Co., Ltd.), and melt and spheroidized by the melting-and-spheroidizing machine (MR-10: product of Nippon Pneumatic Mfg. Co., Ltd.), thereby a negatively charged mother particle Y with the particle diameter within the range of 0.5 - 50 $\mu$m and the average particle diameter R0= 8.3 $\mu$m are obtained.

### (2) Child particles

Adhesive-type child particles a-g shown in Table 1 are prepared as the child particles. The child particle e is combined using compounding of materials shown below in an atmosphere of 70 degrees Celsius for 12 hours in an $N_2$ gas reflux in accordance with a standard method of emulsion polymerization, which is then sufficiently washed in purified water and moisture thereof is evaporated in a vacuum oven, so as to obtain a dried powder sample.

- methyl methacrylate monomer (Wako Pure Chemical Industries, Ltd.) 100 pts.wt
- sodium lauryl sulfate (Wako Pure Chemical Industries, Ltd.) 0.7 pts.wt
- 2,2'-azobis [2-methtl-N-(2-hydroxyethyl)Propiolamide] (Wako Pure Chemical Industries, Ltd.) 0.4 pts.wt
- purified water 400pts.wt

[Table 1]

| | Adhesive-type child particle a | Adhesive-type child particle b | Adhesive-type child particle c | Adhesive-type child particle d | Adhesive-type child particle e | Adhesive-type child particle f | Adhesive-type child particle g |
|---|---|---|---|---|---|---|---|
| Chemical Species | Sol-gel method Amorphous $SIO_2$ | Sol-gel method Amorphous $SIO_2$ | Sol-gel method Amorphous $SIO_2$ | Melanin Formaldehyde resin | Polymethylmethacrylate resin | Gas phase method Amorphous $SIO_2$ | Melanin Formaldehyde resin |
| 3-dimensional crosslinked/ non-crosslinked bonding | crosslinked | crosslinked | crosslinked | crosslinked | Non-crosslinked | crosslinked | crosslinked |
| Particle Diameter [nm] | 110 | 240 | 1000 | 2400 | 350 | 45 | 240 |
| Aspect Ratio | 0.95 | 0.95 | 0.97 | 0.90 | 0.82 | <0.75 | 0.90 |
| Material | [SEAHOSTAR KE-P10] Nippon Shokubai Co., Ltd. | [SEAHOSTAR KE-S30] Nippon Shokubai Co., Ltd. | [SEAHOSTAR KE-P100] Nippon Shokubai Co., Ltd. | [SEAHOSTAR KE-P250] Nippon Shokubai Co., Ltd. | Combine by emulsion polymerization method | [Silica #50] Nippon Aerosil Co., Ltd. | [SEAHOSTAR KE-P250] Nippon Shokubai Co., Ltd. |

(3) Fine particles

Fine particles α, β shown in Fig. 2 are prepared as fine particles.
[Table 2]

|  | Fine particle α | Fine particle β |
|---|---|---|
| Chemical Species | Amorphous silica | Amorphous silica |
| Particle Diameter [nm] | 7 | 8 |
| Aspect Ratio | <0.75 | <0.75 |
|  | Silica #300 Nippon Aerosil Co., Ltd. | HDK H3004 Wacker Asahikasei Silicone Co., Ltd. |

(4) Combination of the mother particle, the child particles and the fine particles

A combined particle is prepared from the positively charged mother particle X and one of child particles a - g shown in Table 1 by a method (i) shown below. Furthermore, the child particle α is attached to a surface of the combined particle by a method (ii) shown below, so as to obtain a positively charged display media particle.
In addition, as a comparative example, the child particle α is attached to a surface of the mother particle X, which has no child particles combined thereto, by the method (ii), so as to obtain a positively charged display media particle Xα.
A combined particle is prepared from the negatively charged mother particle Y and one of the child particles a-g shown in Table 1 by the method (i) shown below. Furthermore, the child particle β is attached to the surface of the combined particle by the method (ii) shown below, so as to obtain a negatively charged display media particle.
In addition, as the comparative example, the child particle βis attached to a surface of the mother particle Y, which has no child particles combined thereto, by the method (ii), so as to obtain a negatively charged display media particle Yβ.

(i) Method for attaching and combining mother particle and child particle

Apparatus: Sample Mill SK-M10 (product of Kyoritsu Riko Co., Ltd.)
Condition: 70 degrees Celsius, 16500rmp x 30-90 minutes
For example, mixed powder (bulk dimensions = apparent dimensions 130 cm$^3$) of the mother particles X and the child particles a at a predetermined ratio is input in the above apparatus at once and exposed by a combining process under a certain condition, and then sieved by an SUS sieve with sieve meshes of 150 μm, so as to obtain the mixed powder passed through the sieve as a combined particle Xa.

(ii) Method for attaching fine particles

Carbon Mixer (product of SMD Corporation)
Condition: 25 degrees Celsius, 4000rmp x 15 minutes
For example, mixed powder (bulk dimensions = apparent dimensions 200 cm$^3$) of the combined particles Xa and the fine particles α at a predetermined ratio is input in the above apparatus at once and exposed by an attaching process under the above condition, and then sieved by the SUS sieve with sieve meshes of 150 μm, so as to obtain the mixed powder passed through the sieve as display media particle Xa α of a fine particles attached type, containing the mother particle + the child particles + the fine particles.
As the comparative example, a combination of the mother particle X having no child particles combined thereto and the fine particles α are prepared by a similar process, so as to obtain a display media particle Xα.
Equivalent amounts of the positively charged particles for display media and the negatively charged particles for display media are mixed and stirred to perform frictional electrification, and then filled in a cell formed by a glass substrate having an internal side which is ITO processed and connected to a power source and a copper substrate, which are disposed via a spacer of 100 μm, under a condition with the volume occupancy of 30%, the temperature at 20 - 30 degrees Celsius, and the relative humidity of 40 - 60 %RH, so as to obtain the information display panel. When each of the ITO glass substrate and the copper substrate are connected to the power source and a direct-current electricity is applied such that the ITO glass substrate has a low potential and the copper substrates has a high potential, the positively charged particles for display media move to a side of the low potential, while the negatively charged particles for display media move to a side of the high potential. Here, in a case where the positively charged particles for display media are in black color and the negatively charged particles for display media are in white color, the black color display is observed through the glass substrate and, when the potential of the applied voltage is reversed, each of the particles for display media moves in opposite directions, thereby the while color display is observed.

Applied voltage is changed from -200 [V] to +200 [V] by 10 [V], and a reflectance ratio at each display condition is measured, so as to obtain a ratio of the reflectance at the white color display and the reflectance at the black color display when the voltage having the same absolute value is applied, as a contrast ratio at the voltage, and the contrast ratio when application voltage is ±200 [V] is defined as an initial C200 to be used an index of a definition of the particles for display media. In addition, a voltage which gives contrast of 0.5 times of that of C200 is defined as initial V50 [V] to be used as an index of applied voltage necessary for driving the particles for display media.

In addition, after 1 million times of alternate application of voltage of ±200 [V] at a frequency 1 [kHz] to the information display panel and reverse movement of the particles for display media thereby, the contrast ratio is measured at each application voltage in the similar manner as stated above, so as to obtain C200 after 1 million times of reverse movements and V50 after 1 million times of reverse movements.

Furthermore, after 10 million times of alternate application of voltage of ±200 [V] at the frequency 1 [kHz] to the information display panel and reverse movement of the particles for display media thereby, the contrast ratio is measured at each application voltage in the similar manner as stated above, so as to obtain C200 after 10 million times of reverse movements and V50 after 10 million times of reverse movements.

The particles for display media fulfilling the initial C200 > 7.0 and the initial V50 < 100[V] are determined as having a good initial property. The particles for display media fulfilling C200 > 5.0 after predetermined times of reverse movements and V50 < 100[V] after predetermined times of reverse movements are determined as having good predetermined time durability. Results of estimations are shown in Table 3.

[Table 3-1]

| | Embodiment 1 | Embodiment 2 | Embodiment 3 | Embodiment 4 | Embodiment 5 | Embodiment 6 |
|---|---|---|---|---|---|---|
| Positively charged particles for display media | Xaα | Xbα | Xcα | Xdα | Xeα | Xfα |
| Fraction of surface coverage by child particles [%] | 85 | 85 | 85 | 85 | 85 | 85 |
| Diameter of child particle [nm] | 110 | 240 | 1000 | 2400 | 350 | 45 |
| Aspect ratio of child particle | 0.95 | 0.95 | 0.97 | 0.90 | 0.82 | <0.75 |
| Diameter ratio of child particle/ mother particle | 0.014 | 0.030 | 0.13 | 0.30 | 0.044 | 0.005 |
| Negatively charged particles for display media | Yaβ | Yaβ | Yaβ | Yaβ | Yaβ | Yaβ |

(continued)

| | Embodiment 1 | Embodiment 2 | Embodiment 3 | Embodiment 4 | Embodiment 5 | Embodiment 6 |
|---|---|---|---|---|---|---|
| Fraction of surface coverage by child particles [%] | 85 | 85 | 85 | 85 | 85 | 85 |
| Diameter of child particle [nm] | 110 | 110 | 110 | 110 | 110 | 110 |
| Aspect ratio of child particle | 0.95 | 0.95 | 0.95 | 0.95 | 0.95 | 0.95 |
| Diameter ratio of child particle/ mother particle | 0.013 | 0.013 | 0.013 | 0.013 | 0.013 | 0.013 |
| Initial C200 | 9.7 | 8.5 | 7.9 | 7.1 | 9.0 | 7.0 |
| Initial V50[V] | 60 | 60 | 80 | 90 | 60 | 80 |
| Initial performance evaluation | GOOD | GOOD | GOOD | GOOD | GOOD | GOOD |
| C200 after 1 million times of reversal movements | 9.4 | 8.1 | 7.1 | 6.6 | 6.9 | 5.1 |
| V50[V] after 1 million times of reversal movements | 60 | 60 | 80 | 90 | 80 | 90 |
| Duration performance evaluation after 1 million times of reversal movements | GOOD | GOOD | GOOD | GOOD | GOOD | GOOD |
| C200 after 10 million times of reversal movements | 8.2 | 7.3 | 6.2 | 5.4 | 4.9 | 4.2 |
| V50[V] after 10 million times of reversal movements | 70 | 80 | 90 | 100 | 110 | 100 |

(continued)

|  | Embodiment 1 | Embodiment 2 | Embodiment 3 | Embodiment 4 | Embodiment 5 | Embodiment 6 |
|---|---|---|---|---|---|---|
| Duration performance evaluation after 10 million times of reversal movements | GOOD | GOOD | GOOD | BAD | BAD | BAD |

[Table 3-2]

|  | Embodiment 7 | Embodiment 8 | Embodiment 9 | Embodiment 10 | Embodiment 11 | Comparative Example |
|---|---|---|---|---|---|---|
| Positively charged particles for display media | Xα | Xaα | Xaα | Xaα | Xgα | Xα |
| Fraction of surface coverage by child particles [%] | 0 | 85 | 55 | 45 | 50 | 0 |
| Diameter of child particle [nm] | - | 110 | 110 | 110 | 240 | - |
| Aspect ratio of child particle | - | 0.95 | 0.95 | 0.95 | 0.90 | - |
| Diameter ratio of child particle/ mother particle | - | 0.014 | 0.014 | 0.014 | 0.03 | 0.014 |
| Negatively charged particles for display media | Yaβ | Yβ | Yaβ | Yaβ | Yaβ | Yβ |
| Fraction of surface coverage by child particles [%] | 85 | 0 | 85 | 85 | 85 | 0 |
| Diameter of child particle [nm] | 110 | - | 110 | 110 | 110 | - |
| Aspect ratio of child particle | 0.95 | - | 0.95 | 0.95 | 0.95 | - |

(continued)

| | Embodiment 7 | Embodiment 8 | Embodiment 9 | Embodiment 10 | Embodiment 11 | Comparative Example |
|---|---|---|---|---|---|---|
| Diameter ratio of child particle/ mother particle | 0.013 | - | 0.013 | 0.013 | 0.013 | - |
| Initial C200 | 8.2 | 8.3 | 8.0 | 7.2 | 7.5 | 6.8 |
| Initial V50[V] | 80 | 80 | 80 | 90 | 90 | 90 |
| Initial performance evaluation | GOOD | GOOD | GOOD | GOOD | GOOD | BAD |
| C200 after 1 million times of reversal movements | 5.9 | 5.7 | 6.3 | 5.9 | 6.2 | 4.4 |
| V50[V] after 1 million times of reversal movements | 90 | 90 | 80 | 90 | 85 | 130 |
| Duration performance evaluation after 1 million times of reversal movements | GOOD | GOOD | GOOD | GOOD | GOOD | BAD |
| C200 after 10 million times of reversal movements | 4.4 | 4.5 | 5.3 | 4.8 | 5.1 | 2.1 |
| V50[V] after 10 million times of reversal movements | 120 | 120 | 90 | 100 | 95 | 160 |
| Duration performance evaluation after 10 million times of reversal movements | BAD | BAD | GOOD | BAD | GOOD | BAD |

As shown in Table 3, all results in the embodiments 1, 2, 3, 9 and 11 are GOOD.

In Embodiment 4, a result of 10 million times of duration performance evaluation is BAD, as the particle diameter of the child particles of the positively charged particles for display media is 2400nm, which is larger than 1/8 of the particle diameter of the mother particle.

In Embodiment 5, the result of 10 million times of duration performance evaluation is BAD, as the child particles of the positively charged particles for display media are non-crosslinked and had low hardness.

In Embodiment 6, the result of 10 million times of duration performance evaluation is BAD, as the aspect ratio of the child particles of the positively charged particles for display media is smaller than 0.75.

In Embodiment 7 and Embodiment 8, the results of 10 million times of duration performance evaluation are BAD, as the particles for display media according to the present invention are used for only one of the positively charged particles for display media or the negatively charged particles for display media.

In Embodiment 10, the result of 10 million times of duration performance evaluation is BAD, as the fraction of surface coverage by the child particles of the positively charged particles for display media is less than 50%.

In Comparative Example, the results of all of the duration performance evaluations are BAD, as conventional display particles, in which only fine particles are attached to the mother particle, are used for both of the positively charged particles for display media and the negatively charged particles for display media.

As set forth above, it is found that it is possible to provide the information display panel capable of maintaining a good image property even after repeated rewrite (10 million times) by use of the particles for display media according to the present invention.

INDUSTRIAL APPLICABILITY

The information display panel according to the present invention is preferably applicable to the display unit for mobile equipment such as notebook personal computers, electric diary, PDAs (Personal Digital Assistants), cellular phones, handy terminals and so on; the electric paper such as electric books, electric newspapers, electric manual (instruction) and so on; the bulletin boards such as signboards, posters, blackboards (whiteboards), and so on; the image display unit for electric calculator, home electric application products, auto supplies and so on; the card display unit such as point cards, IC cards and so on; and the display unit for electric advertisements, information boards, electric POPs (Point Of Presence, Point Of Purchase advertising), electric price tags, electric self tags, electric musical score, RF-ID device and so on. In addition, the information display panel is preferably applicable to the display unit for electric equipments such as POS terminals, car navigation system, clock and so on, and also preferably used as a rewritable paper which drives the display media by use of an external electronic field forming means.

It is to be noted that a driving method of the information display panel according to the present invention may apply a variety of types of the driving methods such as a simple matrix driving method and a static driving method that do not use a switching element for the panel itself, an active matrix driving method using a three-terminal switching element represented by a thin-film transistor (TFT) or a two-terminal switching element represented by a thin-film diode (TFD), an external electronic field driving method using an external electronic field forming method, and the likes.

**Claims**

1.  A particle for display media comprising a mother particle, child particles and fine particles **characterized in that** the child particles, having a molecular structure of three-dimensional crosslinked structure and a particle diameter smaller than that of the mother particle which is free of a three-dimensional crosslinked structure, are embedded in a surface of the mother particle, and
    the fine particles, having a particle diameter smaller than that of the child particle, are attached to the mother particle having the child particles embedded therein.

2.  The particle for display media according to claim 1, wherein the particle diameter of the child particles is smaller than 1/8 of the particle diameter of the mother particle.

3.  The particle for display media according to claim 1 or 2, wherein a fraction of surface coverage of the mother particle by the child particles is equal to or more than 50%.

4.  The particle for display media according to one of claims 1 to 3, wherein the child particles have an aspect ratio of equal to or more than 0.8.

5.  An information display panel, in which at least one kind of display media including at least one kind of charged particles for display media are sealed in a space between two substrates at least one of which is transparent, for displaying an image by moving the display media by application of electrostatic force thereto by means of an electronic field forming means, **characterized in** using at least one kind of the particle for display media described in one of the above claims 1 to 4.

# FIG. 1

(a)

WHITE COLOR DISPLAY

(b)

BLACK COLOR DISPLAY

# FIG. 2

WHITE COLOR DISPLAY

(a)

BLACK COLOR DISPLAY

(b)

# FIG. 3

(a)

WHITE COLOR DISPLAY

22R  6  22G  2  22BL  3Wa

21-1    21-2    21-3

}3W
}3B
}3

4    1    5    3Ba

(b)

BLACK COLOR DISPLAY

22R  6  22G  2  22BL  3Ba

21-1    21-2    21-3

}3B
}3W
}3

4    5    1    3Wa

# FIG. 4

(a)

(b) WHITE COLOR DISPLAY

(c)

(d) BLACK COLOR DISPLAY

Labels: 3W, 3B, 3, 3Wa, 3Ba, 34, 33, 32, 31, 2, 1, 4

# FIG. 5

# FIG. 6

FIG. 7

SQUARE CELL GRID ARRANGEMENT

SQUARE CELL HONEYCOMB ARRANGEMENT 1

CIRCULAR CELL GRID ARRANGEMENT

LINE-STATE CELL

HEXAGONAL CELL HONEYCOMB ARRANGEMENT

TRIANGLE CELL GRID ARRANGEMENT

CIRCULAR CELL HONEYCOMB ARRANGEMENT

TRIANGLE CELL HONEYCOMB ARRANGEMENT

SQUARE CELL NET-LIKE ARRANGEMENT

SQUARE CELL HONEYCOMB ARRANGEMENT 2

<table>
<tr><td colspan="2">**INTERNATIONAL SEARCH REPORT**</td><td colspan="2">International application No.<br>PCT/JP2008/064131</td></tr>
</table>

| A. CLASSIFICATION OF SUBJECT MATTER |
|---|
| *G02F1/167*(2006.01)i, *G02F1/17*(2006.01)i |
| According to International Patent Classification (IPC) or to both national classification and IPC |

| B. FIELDS SEARCHED |
|---|
| Minimum documentation searched (classification system followed by classification symbols)<br>G02F1/167, G02F1/17 |

Documentation searched other than minimum documentation to the extent that such documents are included in the fields searched
|  |  |  |  |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 2004-258615 A  (Matsushita Electric Industrial Co., Ltd.), 16 September, 2004 (16.09.04), Par. Nos. [0255] to [0260]; Fig. 29 & US 2004/0150325 A1    & EP 1416315 A2 & KR 10-2004-0038738 A   & CN 1499460 A & TW 270835 B | 1-5 |
| Y | JP 2006-72283 A  (Bridgestone Corp.), 16 March, 2006 (16.03.06), Par. Nos. [0046] to [0052]; Figs. 1, 4 (Family: none) | 1-5 |
| Y | JP 2002-139750 A  (Fuji Xerox Co., Ltd.), 17 May, 2002 (17.05.02), Par. Nos. [0059] to [0063] & US 2002/0050976 A1 | 1-5 |

| ☒ Further documents are listed in the continuation of Box C. | ☐ See patent family annex. |
|---|---|

| | |
|---|---|
| *    Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>31 October, 2008 (31.10.08) | Date of mailing of the international search report<br>11 November, 2008 (11.11.08) |
|---|---|
| Name and mailing address of the ISA/<br>Japanese Patent Office | Authorized officer |
| Facsimile No. | Telephone No. |

Form PCT/ISA/210 (second sheet) (April 2007)

**EP 2 182 408 A1**

| | | International application No. |
|---|---|---|
| **INTERNATIONAL SEARCH REPORT** | | PCT/JP2008/064131 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2001-350162 A  (Minolta Co., Ltd.),<br>21 December, 2001 (21.12.01),<br>Claim 1; Par. Nos. [0026] to [0032]<br>& US 2002/0009655 A1 | 1-5 |
| A | JP 2007-25078 A  (Asahi Kasei Corp.),<br>01 February, 2007 (01.02.07),<br>Par. No. [0053]<br>(Family: none) | 1-5 |
| A | WO 2003/26051 A1  (Sekisui Chemical Co., Ltd.),<br>27 March, 2003 (27.03.03),<br>Description, page 21, lines 13, 14<br>& US 2004/0053113 A1     & EP 1427043 A1<br>& CA 2428131 A            & CN 1537340 A | 1-5 |

Form PCT/ISA/210 (continuation of second sheet) (April 2007)

**REFERENCES CITED IN THE DESCRIPTION**

**Patent documents cited in the description**

- WO 2003050606 A